# EUROPEAN PATENT SPECIFICATION

(11) **EP 2 479 548 B1**
(45) Date of publication and mention of the grant of the patent: **02.07.2014**
(21) Application number: 11189440.8
(22) Date of filing: 16.11.2011
(51) Int. Cl.: G01M 13/00, G01B 7/02, G01S 13/88

(54) **Methods and systems for monitoring components using a microwave emitter**
Verfahren und Systeme zur Überwachung von Komponenten unter Verwendung eines Mikrowellensenders
Procédés et systèmes de surveillance de composants à l'aide d'un émetteur à micro-ondes

(30) Priority: 22.11.2010 US 951432
(43) Date of publication of application: 25.07.2012
(73) Proprietor: General Electric Company, Schenectady, NY 12345 (US)
(72) Inventor: Sheikman, Boris Leonid, Minden, NV Nevada 89423 (US); Folden, Dwayne Andrew, Minden, NV Nevada 89423 (US); Francis, Samuel Thomas Walter, Minden, NV Nevada 89423 (US); Go, Steven YueHin, Niskayuna, NY New York 12309 (US)
(74) Representative: Picker, Madeline Margaret

(56) References cited:
- EP-A1- 0 765 466
- EP-A2- 1 754 861
- US-A- 4 384 819
- US-A1- 2005 264 275

## Description

The field of the present invention relates generally to a monitoring system and, more particularly, to a method and system for measuring a proximity of a component with respect to a microwave emitter.

At least some known machines, such as power generation systems, include one or more components that may become damaged or worn over time. For example, known turbines include components such as, bearings, gears, and/or rotor blades that wear over time. Continued operation with a worn component may cause additional damage to other components or may lead to a premature failure of the component or system.

To detect component damage within machines, the operation of at least some known machines is maintained with a monitoring system. At least some known monitoring systems use sensors to perform proximity measurements of at least some components of the system. Proximity measurements can be performed using eddy current sensors, magnetic pickup sensors, or capacitive sensors. However, because the measuring range of such pickup sensors is limited, the locations that such pickup sensors may be used may be limited. Moreover, because the frequency response of such pickup sensors is generally low, the accuracy of such sensors may be limited.

WO-A-95/35484 concerns a microwave system and method for monitoring turbine blade vibration. A continuous wave of microwave energy is supplied by a microwave transmitter having a DC power supply to a waveguide having an aperture positioned adjacent a row of rotating turbine blades. A standing wave is set up inside the waveguide when the blade tip is just outside the aperture, so that the transmitter draws a small current. The standing wave collapses in favour of a travelling wave when there are no blade tips adjacent the waveguide aperture, and the transmitter draws a larger current. A voltage waveform may be monitored by an analyser to detect vibrations of the turbine blades.

EP-A-1 754 861 concerns systems and methods for monitoring turbomachinery applications. A microwave sensing system is used to continuously monitor an engine for radial clearances and blade and rotor vibration problems.

In one embodiment according to the present invention, a method for measuring a proximity of a component with respect to a microwave emitter is provided. The method comprises transmitting at least one microwave signal to the microwave emitter. At least one electromagnetic field is generated by the microwave emitter from the microwave signal. Moreover, the method comprises inducing a loading to the microwave emitter by an interaction between the component and the electromagnetic field, wherein at least one detuned loading signal representative of the loading is reflected within a data conduit from the microwave emitter. The detuned loading signal is received by at least one signal processing device. The signal processing device then measures the proximity of the component with respect to the microwave emitter based on the loading signal. An electrical output is generated by the signal processing device.

In another embodiment, a monitoring system for a component is provided. The monitoring system includes a sensor assembly. The sensor assembly includes at least one probe comprising a microwave emitter. The microwave emitter generates at least one electromagnetic field from at least one microwave signal, wherein a loading is induced to the microwave emitter when the component interacts with the electromagnetic field. Moreover, the sensor assembly includes a data conduit that is coupled to the microwave emitter, wherein at least one detuned loading signal representative of the loading is reflected within the data conduit from the microwave emitter. The sensor assembly also includes at least one signal processing device configured to receive the detuned loading signal and to generate an electrical output for use in monitoring the component.

In another embodiment, a monitoring system for a component is provided. The monitoring system includes a sensor assembly and a diagnostic system coupled to the sensor assembly. The sensor assembly includes at least one probe comprising a microwave emitter. The microwave emitter generates at least one electromagnetic field from at least one microwave signal, wherein a loading is induced to the microwave emitter when the component interacts with the electromagnetic field. Moreover, the sensor assembly includes a data conduit that is coupled to the microwave emitter, wherein at least one detuned loading signal representative of the loading is reflected within the data conduit from the microwave emitter. The sensor assembly also includes at least one signal processing device configured to receive the detuned loading signal and to generate an electrical output for use in monitoring the component.

Various aspects and embodiments of the present invention will now be described in connection with the accompanying drawings, in which:
Fig. 1 is a block diagram of an exemplary power system;
Fig. 2 is a block diagram of an exemplary sensor assembly that may be used with the power system shown in Fig. 1;
Fig. 3 is a block diagram of an exemplary diagnostic system that may be used with the power system shown in Fig. 1;
Fig. 4 is a block diagram of an exemplary display device that may be used with the power system shown in Fig. 1; and
Fig. 5 is a flow chart of an exemplary method for measuring a proximity of a component with respect to a microwave emitter that may be used with the power system shown in Fig. 1.

The exemplary methods, apparatus, and systems described herein overcome at least some disadvantages associated with known monitoring systems for components. In particular, the embodiments described herein provide a monitoring system that performs proximity measurements using a microwave emitter. Microwave emitters provide a longer measuring range and a higher frequency response as compared to known eddy current sensors, magnetic pickup sensors, or capacitive sensors that are used with known monitoring systems.

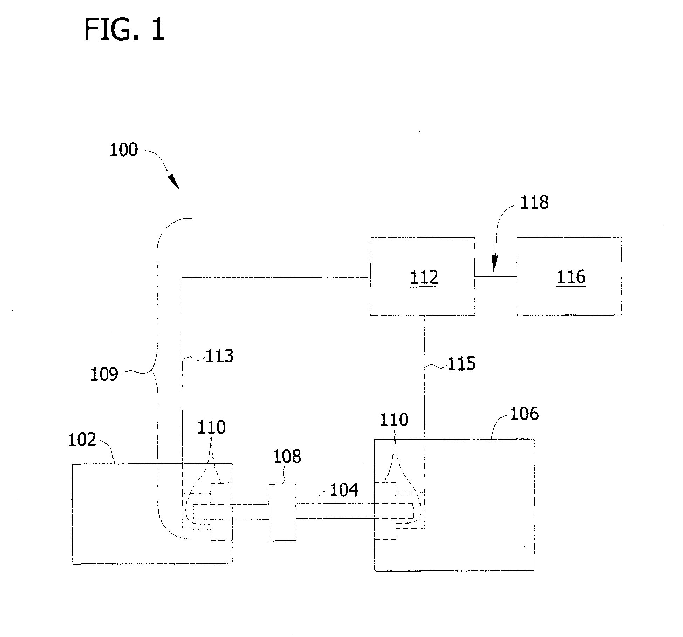

Fig. 1 illustrates an exemplary power system 100 that includes a machine 102, such as, but not limited to a wind turbine, a hydroelectric turbine, a gas turbine, and/or a compressor. In the exemplary embodiment, machine 102 rotates a drive shaft 104 coupled to a load 106, such as a generator. It should be noted that, as used herein, the term "couple" is not limited to a direct mechanical and/or an electrical connection between components, but may also include an indirect mechanical and/or electrical connection between multiple components.

In the exemplary embodiment, drive shaft 104 is at least partially supported by one or more bearings (not shown) housed within machine 102 and/or within load 106. Alternatively or additionally, the bearings may be housed within a separate support structure 108, such as a gearbox, or any other structure that enables power system 100 to function as described herein.

In the exemplary embodiment, power system 100 includes a monitoring system 109 that includes at least one sensor assembly 110 that measures and/or monitors at least one operating condition of machine 102, drive shaft 104, load 106, and/or of any other component that enables system 100 to function as described herein. More specifically, in the exemplary embodiment, sensor assembly 110 is a proximity sensor assembly 110 that is positioned in close proximity to drive shaft 104 for use in measuring and/or monitoring a distance (not shown in Fig. 1) between drive shaft 104 and sensor assembly 110. Moreover, in the exemplary embodiment, sensor assembly 110 uses one or more microwave signals to measure a proximity, such as a static and/or vibration proximity, of a component of power system 100 with respect to sensor assembly 110. As used herein, the term "microwave" refers to a signal or a component that receives and/or transmits signals having frequencies between about 300 Megahertz (MHz) and to about 300 Gigahertz (GHz). Alternatively, sensor assembly 110 may be used to measure and/or monitor any other component of power system 100, and/or may be any other sensor or transducer assembly that enables monitoring system 109 to function as described herein.

In the exemplary embodiment, each sensor assembly 110 is positioned in any relative location within power system 100. Moreover, in the exemplary embodiment, monitoring system 109 includes a diagnostic system 112 that is coupled to one or more sensor assemblies 110. Diagnostic system 112 processes and/or analyzes one or more signals generated by sensor assemblies 110. As used herein, the term "process" refers to performing an operation on, adjusting, filtering, buffering, and/or altering at least one characteristic of a signal. More specifically, in the exemplary embodiment, sensor assemblies 110 are coupled to diagnostic system 112 via a data conduit 113 or a data conduit 115. Alternatively, sensor assemblies 110 may be wirelessly coupled to diagnostic system 112.

After diagnostic system 112 processes and/or analyzes the one or more signals generated from sensor assemblies 110, diagnostic system 112 then transmits the processed signals to a display device 116, which is also included in monitoring system 109. Display device 116 is coupled to diagnostic system 112 via a data conduit 118. More specifically, in the exemplary embodiment, the signals are transmitted to display device 116 via data conduit 118 for display or output to a user. Alternatively, display device 116 may be wirelessly coupled to diagnostic system 112.

During operation, in the exemplary embodiment, because of wear, damage, or vibration, for example, one or more components of power system 100, such as drive shaft 104, may change positions with respect to one or more sensor assemblies 110. For example, vibrations may be induced to the components and/or the components may expand or contract as the operating temperature within power system 100 changes. In the exemplary embodiment, sensor assemblies 110 measure and/or monitor the proximity, such as the static and/or vibration proximity, and/or the relative position of the components with respect to sensor assembly 110 and transmit a signal representative of the measured proximity and/or relative position of the components (hereinafter referred to as a "proximity measurement signal") to diagnostic system 112 for processing and/or analysis.

After diagnostic system 112 processes and/or analyzes the proximity measurement signal, the proximity measurement signal is then transmitted to display device 116 for display or output to a user. In the exemplary embodiment, display device 116 provides a graphical or textual representation of the proximity measurement. Display device 116 may provide signal representations in various forms, such as waveforms, alerts, alarms, shutdowns, charts and/or graphs.

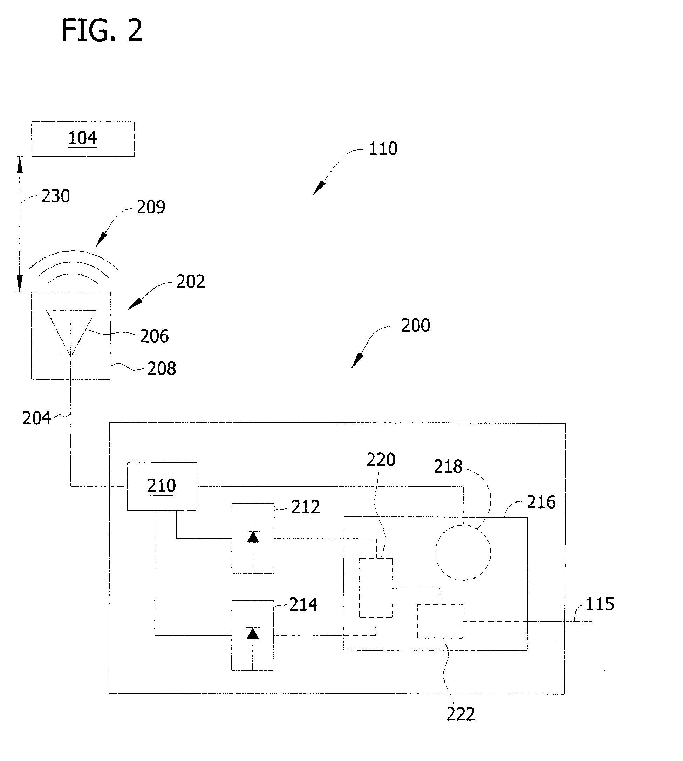

Fig. 2 is a schematic diagram of sensor assembly 110 that may be used with power system 100 (shown in Fig. 1). In the exemplary embodiment, sensor assembly 110 includes a signal processing device 200 and a probe 202 that is coupled to signal processing device 200 via a data conduit 204. Alternatively, probe 202 may be wirelessly coupled to signal processing device 200.

Moreover, in the exemplary embodiment, probe 202 includes an emitter 206 that is coupled to and/or positioned within a probe housing 208 and generates an electromagnetic field 209. Emitter 206 is coupled to signal processing device 200 via data conduit 204. Alternatively, emitter 206 may be wirelessly coupled to signal processing device 200. More specifically, in the exemplary embodiment, probe 202 is a microwave probe 202 that includes a microwave emitter 206. In the exemplary embodiment, data conduit 204 has an impedence that matches the impedence of emitter 206. Alternatively, conduit 204 may have any impedance that enables impedance to be substantially constant throughout the entire power system 100 and enables sensor assembly 110 and power system 100 to function as described herein.

Moreover, in the exemplary embodiment, signal processing device 200 includes a directional coupling device 210 that is coupled to a transmission power detector 212, to a reception power detector 214, and to a signal conditioning device 216. Furthermore, in the exemplary embodiment, signal conditioning device 216 includes a signal generator 218, a subtractor 220, and a linearizer 222.

During operation, in the exemplary embodiment, signal generator 218 generates at least one electrical signal having a microwave frequency (hereinafter referred to as a "microwave signal") that is equal and/or approximately equal to the resonant frequency of emitter 206. Signal generator 218 transmits the microwave signal to directional coupling device 210. Directional coupling device 210 transmits the microwave signal to transmission power detector 212 and to emitter 206. As the microwave signal is transmitted through emitter 206, electromagnetic field 209 is emitted from emitter 206 and out of probe housing 208. If an object, such as a drive shaft 104 or another component of machine 102 (shown in Fig. 1) and/or of power system 100 enters and/or changes a relative position within electromagnetic field 209, an electromagnetic coupling may occur between the object and field 209. More specifically, because of the presence of the object within electromagnetic field 209 and/or because of such object movement, electromagnetic field 209 is disrupted because of an induction and/or capacitive effect within the object that may cause at least a portion of electromagnetic field 209 to be inductively and/or capacitively coupled to the object as an electrical current and/or charge. In such an instance, emitter 206 is detuned (i.e., a resonant frequency of emitter 206 is reduced and/or changed, etc.) and a loading is induced to emitter 206. The loading induced to emitter 206 causes a reflection of the microwave signal (hereinafter referred to as a "detuned loading signal") to be transmitted through data conduit 204 to directional coupling device 210. In the exemplary embodiment, the detuned loading signal has a lower power amplitude and/or a different phase than the power amplitude and/or the phase of the microwave signal. Moreover, in the exemplary embodiment, the power amplitude of the detuned loading signal is dependent upon the proximity of the object to emitter 206. Directional coupling device 210 transmits the detuned loading signal to reception power detector 214.

In the exemplary embodiment, reception power detector 214 measures an amount of power contained in the distortion signal and transmits a signal representative of the measured detuned loading signal power to signal conditioning device 216. Moreover, transmission power detector 212 detects an amount of power contained in the microwave signal and transmits a signal representative of the measured microwave signal power to signal conditioning device 216. In the exemplary embodiment, subtractor 220 receives the measured microwave signal power and the measured detuned loading signal power, and calculates a difference between the microwave signal power and the detuned loading signal power. Subtractor 220 transmits a signal representative of the calculated difference (hereinafter referred to as a "power difference signal") to linearizer 222. In the exemplary embodiment, an amplitude of the power difference signal is substantially proportional, such as inversely proportional or exponentially proportional, to a distance 230 defined between the object, such as shaft 104, (i.e., the object proximity) within electromagnetic field 209 and probe 202. Depending on a geometry or another characteristic of emitter 206, however, the amplitude of the power difference signal may at least partially exhibit a non-linear relationship with respect to the object proximity.

In the exemplary embodiment, linearizer 222 transforms the power difference signal into an electrical output, such as a voltage output signal (i.e., the "proximity measurement signal") that exhibits a substantially linear relationship between the object proximity and the amplitude of the proximity measurement signal. Moreover, in the exemplary embodiment, linearizer 222 transmits the proximity measurement signal to diagnostic system 112 (shown in Fig. 1) with a scale factor enabled for processing and/or analysis within diagnostic system 112. Linearizer 222 can utilize either analog or digital signal processing techniques as well as using a hybrid mix of the two. For example, in the exemplary embodiment, the proximity measurement signal has a scale factor of Volts per millimeter. Alternatively, the proximity measurement signal may have any other scale factor that enables diagnostic system 112 and/or power system 100 to function as described herein.

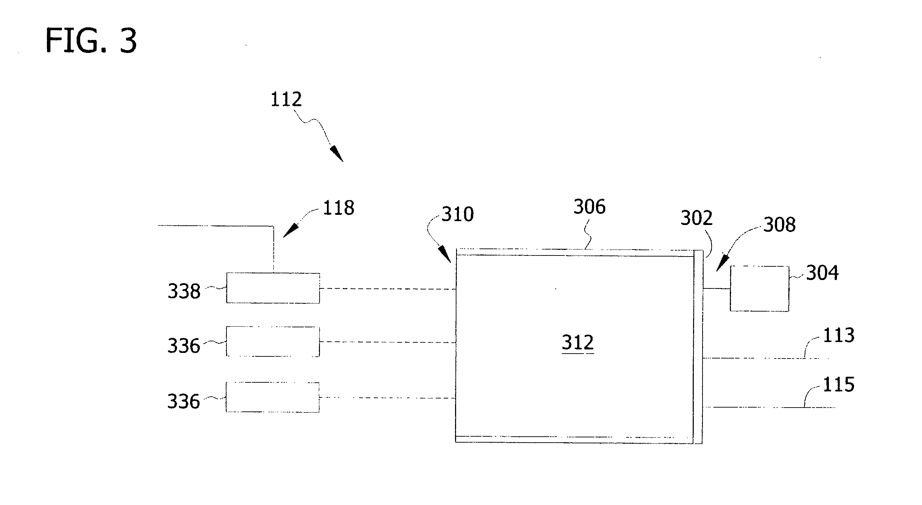

Fig. 3 is a block diagram of diagnostic system 112 that may be used with system 100 (shown in Fig. 1). In the exemplary embodiment, diagnostic system 112 includes a system backplane 302. Moreover, in the exemplary embodiment, one or more sensor assemblies 110 (shown in Figs. 1 and 2) are coupled to system backplane 302 such that system backplane 302 receives signals from one or more sensor assemblies 110 via data conduit 113 or data conduit 115.

Moreover, in the exemplary embodiment, diagnostic system 112 receives power from a power supply 304 coupled to system backplane 302. Alternatively, diagnostic system 112 may receive power from any suitable power source that enables system 112 to function as described herein.

In the exemplary embodiment, system backplane 302 is positioned within a housing 306 and includes a diagnostic system bus (not shown) that includes a plurality of conductors (not shown). More specifically, in the exemplary embodiment, system backplane 302 is positioned towards, or adjacent to, a rear portion 308 of housing 306 and a front portion 310 of housing 306 is open to an external environment. Housing 306 includes a cavity 312 defined therein that is in flow communication with front portion 310.

Diagnostic system 112 includes at least one monitoring module 336 that processes at least one signal received from sensor assembly 110. In the exemplary embodiment, diagnostic system 112 includes two monitoring modules 336. Alternatively, diagnostic system 112 can include any number of monitoring modules 336 that enable system 112 to function as described herein. Monitoring modules 336 are coupled to front portion 310 of housing 306 and are at least partially positioned within housing 306. As such, in the exemplary embodiment, signals from each sensor assembly 110 are transmitted to monitoring modules 336 through system backplane 302. Moreover, at least one signal may be transmitted between different monitoring modules 336.

In the exemplary embodiment, diagnostic system 112 also includes at least one system monitoring module 338 that is coupled to housing front portion 310 such that module 338 is at least partially within housing 306. In the exemplary embodiment, system monitoring module 338 receives data and/or status signals transmitted from monitoring modules 336 and/or from other components of diagnostic system 112. System monitoring module 338 processes and/or analyzes the data and/or status signals and transmits the signals to display device 116 (shown in Fig. 1) for display or output to a user.

During operation, sensor assembly 110 transmits a signal to diagnostic system 112. More specifically, linearizer 222 (shown in Fig. 2) transmits the proximity measurement signal to system backplane 302 with a scale factor that is enabled for processing and/or analysis within diagnostic system 112. In the exemplary embodiment, the signal is transmitted through system backplane 302 to monitoring modules 336 for additional processing and/or analysis. Monitoring module 336 then transmits the processed data and/or signal to system monitoring module 338 for further processing and/or analysis. System monitoring module 338 transmits the processed signal to display device 116 via data conduit 118.

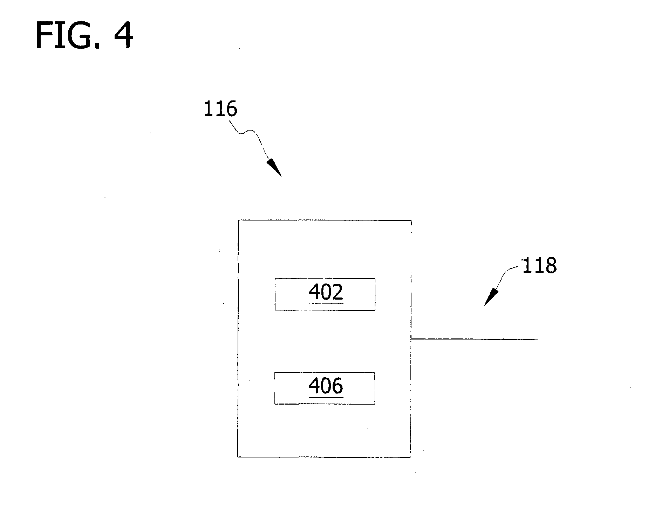

Fig. 4 illustrates display device 116 that can be used with power system 100 (shown in Fig. 1). Display device 116 is coupled to diagnostic system 112 (shown in Figs. 1 and 3). More specifically, in the exemplary embodiment, system monitoring module 338 (shown in Fig. 3) is coupled to display device 116 via data conduit 118.

In the exemplary embodiment, display device 116 provides a graphical or textual representation of the proximity measurement. Such representations may be provided to a user in the form of waveforms, charts, and/or graphs. For example, display device 116 includes a display adaptor 402, such as a cathode ray tube (CRT), a liquid crystal display (LCD), an organic light emitting diode (OLED) display, and/or an electronic ink display. Display device 116 may also be a capacitive touch screen display or other suitable display device 116.

Moreover, in the exemplary embodiment, display device 116 includes a keypad 406 which operates in a conventional manner. A user can operate desired functions available for power system 100 by contacting keypad 406. For example, a user can input the desired output representation user wishes to see by contacting keypad 406.

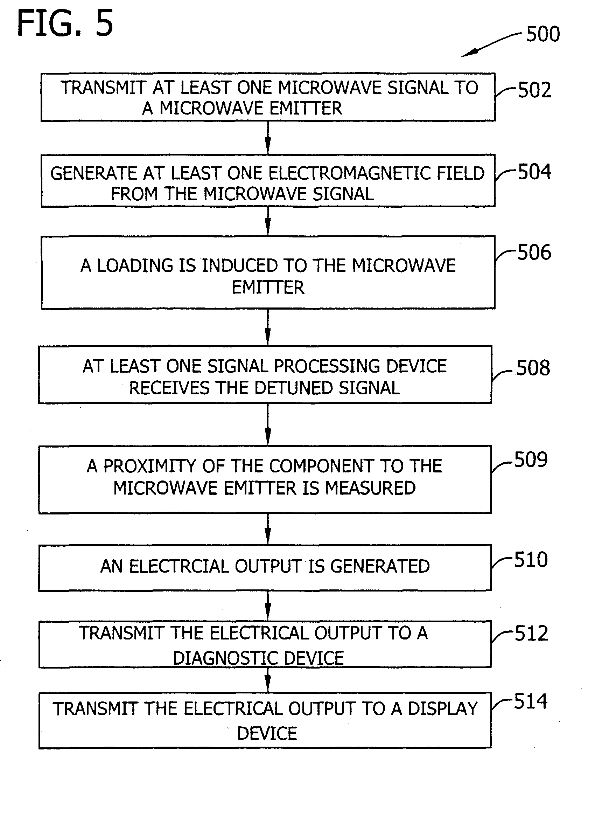

Fig. 5 is a flow chart illustrating an exemplary method 500 for measuring a proximity of a component with respect to a microwave emitter, such as emitter 206 (shown in Fig. 2), that may be used with a power system, such as system 100 (shown in Fig. 1). In the exemplary embodiment, at least one microwave signal is transmitted 502 to microwave emitter 206. At least one electromagnetic field 209 (shown in Fig. 2) is generated 504 by microwave emitter 206 from the microwave signal. A loading is then induced 506 to microwave emitter 206 by an interaction between the machine component, such as a drive shaft 104 (shown in Fig. 1), and electromagnetic field 209, wherein at least one detuned loading signal representative of the loading is reflected within a data conduit 204 (shown in Fig. 2) from microwave emitter 206.

In the exemplary embodiment, the detuned loading signal is received 508 by at least one signal processing device 200 (shown in Fig. 2). A proximity of machine component 104 to microwave emitter 206 is calculated 509 by signal processing device 200 based on the detuned loading signal. An electrical output by signal processing device 200 is then generated 510. The electrical output is transmitted 512 to a diagnostic system 112 (shown in Figs. 1 and 3). The electrical output is then transmitted 514 to a display device 116 (shown in Figs. 1 and 4) for display or output to a user.

The above-described embodiments provide an efficient and cost-effective monitoring system for use in measuring the proximity of a machine component. In particular, the embodiments described herein provide a monitoring system that performs proximity measurements using a microwave emitter. Microwave emitter based systems provide a longer measuring range and a higher frequency response as compared to known eddy current sensors, magnetic pickup sensors, or capacitive sensors used with known monitoring systems. As such, when using the microwave emitter to measure the proximity of a machine, the measuring range is substantially extended and the locations where the monitoring system is used is not substantially limited. Moreover, because the frequency response is higher for the microwave emitter as compared to known eddy current or magnetic pickup sensors, the monitoring system discussed herein is enabled to provide more accurate measurements.

Exemplary embodiments of a monitoring system and a method for measuring a proximity of a machine with respect to a microwave emitter are described above in detail. The method and monitoring system are not limited to the specific embodiments described herein, but rather, components of the monitoring system and/or steps of the method may be utilized independently and separately from other components and/or steps described herein. For example, the monitoring system may also be used in combination with other measuring systems and methods, and is not limited to practice with only the power system as described herein. Rather, the exemplary embodiment can be implemented and utilized in connection with many other measurement and/or monitoring applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:

## Claims

1. A monitoring system (109) for a component (104), said system comprising:
a sensor assembly (110) comprising:
at least one probe (202) comprising a microwave emitter (206) that generates at least one electromagnetic field (209) from at least one microwave signal, wherein a loading is induced to said microwave emitter when the component interacts with the at least one electromagnetic field;
a data conduit (113, 115) coupled to said microwave emitter, wherein at least one loading signal representative of the loading is reflected within said data conduit from said microwave emitter; and
at least one signal processing device (200) configured to receive the at least one loading signal and to generate an electrical output for use in monitoring the component

2. A monitoring system (109) in accordance with Claim 1, wherein said at least one signal processing device (200) is further configured to measure a proximity of the component (104) to said microwave emitter (206) based on the at least one loading signal.

3. A monitoring system (109) in accordance with any preceding Claim, wherein the electrical output is substantially proportional to a proximity measurement of the component (104).

4. A monitoring system (109) in accordance with any preceding Claim, wherein the at least one microwave signal is substantially equal to a resonant frequency of said microwave emitter (206).

5. A monitoring system (109) in accordance with any preceding Claim, further comprising a diagnostic system (112) coupled to said sensor assembly (110).

6. A monitoring system (109) in accordance with Claim 5, wherein said diagnostic system (112) comprises at least one monitoring module (336) configured to receive the electrical output from said sensor assembly (110).

7. A monitoring system (109) in accordance with Claim 5 or Claim 6, wherein said diagnostic system (112) comprises at least one system monitoring module (338) configured to receive at least one signal from said at least one monitoring module (336).

8. A monitoring system (109) in accordance with any preceding Claim, further comprising a signal generator (218) that generates and transmits said at least one microwave signal to the microwave emitter.

9. A monitoring system (109) for a component (104), said system comprising:
a sensor assembly (110) in accordance with any preceding Claim and a diagnostic system (112) coupled to said sensor assembly.

10. A monitoring system (109) in accordance with Claim 9, further comprising a display device (116) coupled to said diagnostic system (112).

11. A monitoring system (109) in accordance with Claim 9 or Claim 10, wherein said display device (116) comprises a computer system.

## Patentansprüche

1. Überwachungssystem (109) für eine Komponente (104), wobei das System Folgendes umfasst:
eine Sensorenbaugruppe (110), bestehend aus:
mindestens einer Sonde (202) mit einem Mikrowellensender (206), der mindestens ein elektromagnetisches Feld (209) von mindestens einem Mikrowellensignal erzeugt, wobei eine Ladung zu dem Mikrowellensender induziert wird, wenn die Komponente mit dem mindestens einen elektromagnetischen Feld in Wechselwirkung steht,
einer an den Mikrowellensender gekoppelten Datenverbindung (113, 115), wobei mindestens ein für die Ladung repräsentatives Ladungssignal innerhalb der Datenverbindung von dem Mikrowellensender reflektiert wird, und
mindestens einer Signalverarbeitungsvorrichtung (200), die dazu ausgelegt ist, das mindestens eine Ladungssignal zu empfangen und eine elektrische Leistung zur Verwendung bei der Überwachung der Komponente zu erzeugen.

2. Überwachungssystem (109) nach Anspruch 1, wobei die mindestens eine Signalverarbeitungsvorrichtung (200) weiter dazu ausgelegt ist, einen Abstand der Komponente (104) zu dem Mikrowellensender (206) basierend auf dem mindestens einen Ladungssignal zu messen.

3. Überwachungssystem (109) nach einem der vorhergehenden Ansprüche, wobei die elektrische Leistung im Wesentlichen proportional zu einer Abstandsmessung der Komponente (104) ist.

4. Überwachungssystem (109) nach einem der vorhergehenden Ansprüche, wobei das mindestens eine Mikrowellensignal im Wesentlichen gleich einer Resonanzfrequenz des Mikrowellensenders (206) ist.

5. Überwachungssystem (109) nach einem der vorhergehenden Ansprüche, ferner umfassend ein an die Sensorenbaugruppe (110) gekoppeltes Diagnosesystem (112).

6. Überwachungssystem (109) nach Anspruch 5, wobei das Diagnosesystem (112) mindestens ein Überwachungsmodul (336) umfasst, das dazu ausgelegt ist, die elektrische Leistung von der Sensorenbaugruppe (110) zu empfangen.

7. Überwachungssystem (109) nach Anspruch 5 oder 6, wobei das Diagnosesystem (112) mindestens ein Systemüberwachungsmodul (338) umfasst, das dazu ausgelegt ist, mindestens ein Signal von dem mindestens einen Überwachungsmodul (336) zu empfangen.

8. Überwachungssystem (109) nach einem der vorherigen Ansprüche, ferner umfassend einen Signalgeber (218), der das mindestens eine Mikrowellensignal erzeugt und zu dem Mikrowellensender überträgt.

9. Überwachungssystem (109) für eine Komponente (104), wobei das System Folgendes umfasst: eine Sensorenbaugruppe (110) nach einem der vorherigen Ansprüche und ein an die Sensorenbaugruppe gekoppeltes Diagnosesystem (112).

10. Überwachungssystem (109) nach Anspruch 9, ferner umfassend eine an das Diagnosesystem (112) gekoppelte Anzeigevorrichtung (116).

11. Überwachungssystem (109) nach Anspruch 9 oder 10, wobei die Anzeigevorrichtung (116) ein Rechnersystem umfasst.

## Revendications

1. Système de surveillante (109) pour un
composant (104), ledit système comprenant :
un assemblage de capteur (110) comprenant :
au moins une sonde (202) comprenant un émetteur à micro-ondes (206) qui génère au moins un champ électromagnétique (209) à partir d'au moins un signal de micro-ondes, dans lequel une charge est induite sur ledit émetteur à micro-ondes lorsque le composant interagit avec le au moins un champ électromagnétique ;
un conduit de données (113, 115) couplé audit émetteur à micro-ondes, dans lequel au moins un signal de charge représentatif de la charge est réfléchi dans ledit conduit de données depuis ledit émetteur à micro-ondes ; et
au moins un dispositif de traitement de signaux (200) configuré pour recevoir le au moins un signal de charge et pour générer une sortie électrique pour usage dans la surveillance du composant.

2. Système de surveillance (109) selon la revendication 1, dans lequel ledit au moins un dispositif de traitement de signaux (200) est encore configuré pour mesurer la proximité du compostant (104) avec ledit émetteur à micro-ondes (206) sur la base du au moins un signal de charge.

3. Système de surveillance (109) selon l'une quelconque des revendications précédentes, dans lequel la sortie électrique est sensiblement proportionnelle à une mesure de proximité du composant (104).

4. Système de surveillance (109) selon l'une quelconque des revendications précédentes, dans lequel le au moins un signal de micro-ondes est sensiblement égal à une fréquence de résonance dudit émetteur à micro-ondes (206).

5. Système de surveillance (109) selon l'une quelconque des revendications précédentes, comprenant en outre un système de diagnostic (112) couplé audit assemblage de capteur (110).

6. Système de surveillance (109) selon la revendication 5, dans lequel ledit système de diagnostic (112) comprend au moins un module de surveillance (336) configuré pour recevoir la sortie électrique dudit assemblage de capteur (110).

7. Système de surveillance (109) selon la revendication 5 ou la revendication 6, dans lequel ledit système de diagnostic (112) comprend au moins un module de surveillance de système (338) configuré pour recevoir au moins un signal dudit au moins un module de surveillance (336).

8. Système de surveillance (109) selon l'une quelconque des revendications précédentes, comprenant en outre un générateur de signaux (218) qui génère et transmet ledit au moins un signal de micro-ondes à l'émetteur à micro-ondes.

9. Système de surveillance (109) pour un composant (104), ledit système comprenant :
un assemblage de capteur (110) selon l'une quelconque des revendications précédentes et un système de diagnostic (112) couplé audit assemblage de capteur.

10. Système de surveillance (109) selon la revendication 9, comprenant en outre un dispositif d'affichage (116) couplé audit système de diagnostic (112).

11. Système de surveillance (109) selon la revendication 9 ou la revendication 10, dans lequel ledit dispositif d'affîchage (116) comprend un système informatique.
